# EUROPEAN PATENT SPECIFICATION

(11) **EP 2 979 919 B1**
(45) Date of publication and mention of the grant of the patent: **16.12.2020**
(21) Application number: 14775566.4
(22) Date of filing: 27.03.2014
(51) Int. Cl.: B60L 50/20

(54) **ELECTRIC-POWERED VEHICLE**
ELEKTRISCH ANGETRIEBENES FAHRZEUG
VÉHICULE ÉLECTRIQUE

(30) Priority: 28.03.2013 JP 2013070734
(43) Date of publication of application: 03.02.2016
(73) Proprietor: Equos Research Co., Ltd., Tokyo 101-0021 (JP)
(72) Inventor: SUZUKI, Seiichi, Tokyo 101-0021 (JP); SHIMAKAWA, Kenichi, Tokyo 101-0021 (JP); TAKAHASHI, Munehiro, Tokyo 101-0021 (JP); KAMIYA, Hitoshi, Tokyo 101-0021 (JP)
(74) Representative: TBK
(86) International application number: PCT/JP2014/058835
(87) International publication number: WO 2014/157508

(56) References cited:
- EP-A2- 1 236 640
- JP-A- H0 848 279
- JP-A- 2000 333 311
- JP-A- 2001 114 184
- JP-A- 2001 114 184
- JP-A- 2002 255 081
- JP-A- 2010 030 539
- JP-A- 2010 187 479

## Description

### Technical Field

The present invention relates to an electric vehicle, and more specifically to an electric vehicle that travels by regarding rotation of pedals a driver is pumping as drive commands.

### Background Art

There have been vehicles, such as bicycles, that move forward by conveying a drive force to a drive wheel via a chain as pedals of cranks that are connected to an input shaft are pumped by left and right legs. Besides such a mechanical power transmission mechanism, an assisted bicycle that employs an electric motor to bolster the drive force has been proposed.

Meanwhile, as disclosed in patent documents listed below, what is also proposed is a bicycle that does not have any mechanical transmission mechanism but includes an input device involving pedals and a drive device that drives a drive wheel, with the input and drive devices electrically connected together.

### Prior Art Documents

### Patent Documents

[Patent Document 1] JP2001-114184A
[Patent Document 2] JP2010-187479A

### Summary of the Invention

### Problems to be Solved by the Invention

In the conventional electric bicycle, the drive wheel is not mechanically connected to a rotation mechanism of the pedals. When a driver pumps the pedals, torque of the pedals is not directly transmitted to the drive wheel. In the case of a conventional bicycle or assisted bicycle that includes a mechanical power transmission mechanism, a driver adjusts the force he/she applies to the pedals while feeling resistance from the pedals. However, in the case of the electric bicycle, a driver cannot feel resistance through the pedals, which comes from the drive wheel. Therefore, the driver feels uncomfortable during driving because he/she cannot pump the pedals in the same way as he/she would do with conventional bicycles.

For example, in a bicycle, due to the weight of the bicycle and the body weight of the driver, an inertial force occurs. When the driver starts to pedal a stopped bicycle (when start to pedal), or when the driver accelerates a running bicycle, he/she would feel heavy pedal strokes compared with when he/she is pedaling the bicycle at constant speed.

In the case of the conventional electric bicycle, the drive wheel is not mechanically connected to the pedals. Therefore, the driver has little chance of feeling pedaling (or the weight of the pedals), which varies according to running conditions, through his/her pedaling legs, and this causes an uncomfortable feeling.

In the case of an electric bicycle disclosed in Patent Document 1, what is disclosed is a member (e.g. power generator) that gives rotation resistance to a pedal crank shaft in an attempt to mimic a travel feeling of general bicycles. However, Patent Document 1 does not provide any detailed explanation of how such control is carried out and how to mimic the travel feeling of general bicycles.

In the case of an electric bicycle disclosed in Patent Document 2, what is provided is a mechanism for adjusting the weight of the pedals. However, the mechanism is aimed at changing the weight of the pedals based on the state of the vehicle, such as remaining battery levels. In this manner, the mechanism is not intended to control in such a way as to mimic the travel feeling of general bicycles.

Document JP 2000 333311 A discloses an electric vehicle according to the preamble of claim 1. According to this document, a pedal is provided at the position of the front end part of a machine body frame where passengers can steps the pedal with their leg force, and a rotary angle detection sensor for detecting the rotary angle of the pedal is provided in the machine body frame. Also, a load-applying means is further connected to the rotary part of the pedal so that a load can be applied when the pedal is to be rotated. More specifically, in the load-applying means, a friction plate is provided at the rotary part of the pedal so that a load can be applied to the friction plate when the pedal is to be rotated. Then, the load-applying means is provided with an adjustment means such as an adjustment knob, thus adjusting the size of the load when rotating the pedal by adjusting force being applied to the friction plate according to the degree of functional recovery training.

Document EP 1 236 640 A2 discloses a control unit for a motor-assisted bicycle, such as a bicycle, which provides an assist drive power to a motor-assisted bicycle during a period of initial pedaling or startup on an upward slope or at the time of acceleration. A first detection signal is outputted when a vehicle speed is equal to or less than a predetermined vehicle speed. A second detection signal is outputted when acceleration is equal to or more than a predetermined value on the basis of a change in the amount of the vehicle speed. A road surface inclination is determined from a map on the basis of a ratio between an actual running resistance and a flat road running resistance. A coefficient K is retrieved form the map corresponding to either the first detection signal or the second detection signal to increase the assist power from the map on the basis of the vehicle speed. The coefficient K is inputted into an assist power calculating portion, and the required assist drive power is calculated.

Document JP H08 48279 A discloses a power bicycle. A generator is rotated by a force of a shaft rotated by stepping on a pedal to generate electric power. The generated electric power is supplied to a battery and controller. The electric power generated by the battery and a control signal of the controller are supplied to a motor to controllably rotate the motor with a specific rotational frequency. The rotation of the motor is reduced by a reduction gear to be supplied to a rear wheel. The controller is composed of a microcomputer which is connected to the motor through a current detecting circuit. The electric power is thus generated according to a force for stepping on the pedal to charge the battery through a resistor and at the same time to feed the power to lamps or the like and warning device or the like.

The object of the present invention is to provide an electric vehicle that enables a user to feel in the same way as when he/she pedals a vehicle in which a pedal rotation mechanism is mechanically connected to a drive wheel.
This object is achieved by an electric vehicle according to claim 1. Advantageous further developments are as set forth in the dependent claims.

According to some aspects there is provided a vehicle according to independent claim 1. According to further aspects there is provided a vehicle according to dependent claims 2-6.

### Brief Description of the Drawings

FIG. 1 is a side overall view of an electric vehicle of the present invention.
FIG. 2 is a block diagram showing the configuration of an electric system of the electric vehicle of the present invention.
FIG. 3 is a flowchart showing how the electric vehicle of the present invention is controlled.
FIG. 4 is a flowchart showing how the electric vehicle of the present invention is controlled.
FIG. 5 is a flowchart showing how the electric vehicle of the present invention is controlled.
FIG. 6 is a vector diagram showing directions of forces being applied to a pedal.
FIG. 7 is a vector diagram showing directions of forces that vary depending on the position of the pedal.
FIG. 8 is a graph showing changes in pedal rotation speed.
FIG. 9 is a flowchart showing how the electric vehicle of the present invention is controlled.

### Embodiments for Carrying Out the Invention

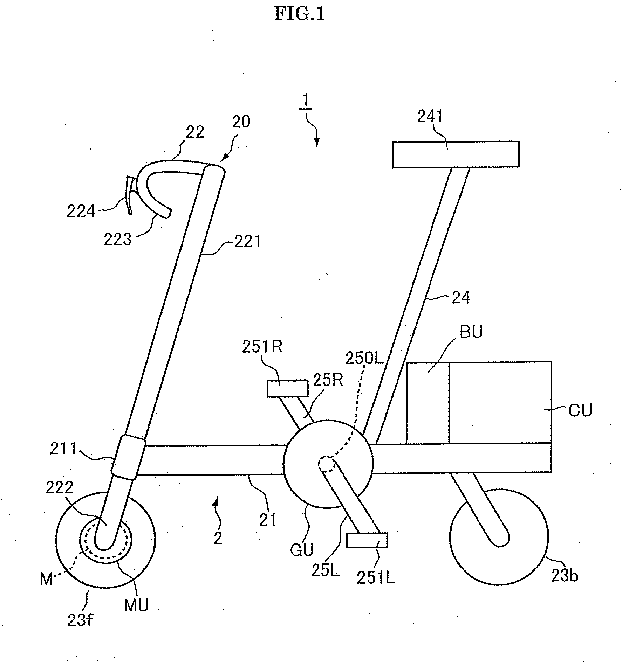

Hereinafter, a preferred embodiment of a vehicle of the present invention will be described in detail based on the accompanying drawings. FIG. 1 shows one embodiment of an electric vehicle 1 of the present invention, and is an overall perspective view of the electric bicycle . A vehicle body 2 includes an operation unit 20 and a body 21. The operation unit 20 includes a handle 22, a stem 221, which serves as a rotation shaft of the handle 22, and a front wheel 23f. For example, the body 21 may be one base body, or a frame made by combining a plurality of members. In this embodiment, the body 21 is one base body. Through a front-end head tube 211 of the body 21, the stem 221 of the handle 22 is supported in a rotatable manner. In a rear-end portion, a rear wheel 23b, which is a driven wheel, is supported, and a control unit CU and a battery unit BU are mounted. Incidentally, in handle grip portions 223 located at both ends of the handle 22, brake levers 224, which serve as braking operation units to control a braking device, are provided. In the brake levers 224, a brake sensor BBS is provided to detect an operation amount for braking.

In a central portion of the body 21, a post 24 is erected. In a base-end portion of the post 24, a power generation unit GU is provided. To a top portion of the post 24, a saddle 241 is attached. To a lower end portion of the stem, a front fork 222 is connected. On tips of the front fork 222, the front wheel 23f, which is a drive wheel, is provided. In a center-axis portion of the front wheel 23f, a drive motor unit MC is provided. The drive motor unit MC includes an in-wheel motor, which is a drive motor M. An output shaft of the in-wheel motor is fixed to the front fork 222. The drive wheel 23f is driven and rotated as a drive wheel as the drive wheel 23f is driven by the in-wheel motor. The drive motor unit MU includes a drive wheel rotation speed sensor MRS, which work as a running condition detection unit, and a drive motor current sensor MTS. The drive wheel rotation speed sensor MRS detects the rotation speed of the drive wheel. The drive motor current sensor MTS detects the value of current flowing through the drive motor. Based on the current value, torque Tm that is output from the drive motor M can be determined.

Input shafts protrude from the left and right sides of the power generation unit GU. To the left and right input shafts, cranks 25L and 25R are connected in opposite directions, forming a crankshaft 250L (and a right crankshaft 250R, which is not shown in the diagram) . At the tips of the left and right cranks 25L and 25R, pedals 251L and 251R are supported in a rotatable manner. The power generation unit GU includes a power generator G, which serves as a resistance applying unit. A pedal force that is applied to the cranks 25L and 25R is transmitted to a rotor of the power generator G via the input shafts as rotation torque Tp. The power generation unit GU may include a mechanical transmission mechanism that conveys the torque Tp being applied to the input shafts to the power generator G, such as a transmission device. The power generation unit GU further includes a power generator current sensor PIS; a pedal torque sensor PTS, which serves as a running condition detection unit; and a pedal rotation speed sensor PRS. The pedal torque sensor PTS is a sensor designed to detect torque TP coming from the pedals that a driver are pumping. The pedal rotation speed sensor PRS detects the rotation speed of the pedals. The power generator current sensor PIS detects the value of current flowing through the power generator. The current value is used to measure a drag force being applied to the pedals from the power generator.

The control unit CU includes a vehicle control circuit EC, which includes integrated circuits, memories, and the like; a battery control circuit BC, which controls the charging and discharging of a battery; a power generator control circuit GC; and a motor control circuit MC. The battery unit BU, which is provided adjacent to the control unit CU, includes a battery BT; a battery current sensor BIS, which detects the value of current output from the battery BT; and a voltage sensor BVS, which detects voltage output from the battery BT. The battery unit BU is provided on the vehicle body 2 in a mechanically and electrically detachable manner. After being detached from the vehicle body 2, the battery unit BU can be recharged with an external power source. The power of the battery BT is supplied to the drive motor M. During regeneration of power by the drive motor M, the regenerated power is supplied to the battery BT. When the power generator G is generating a pedal drag force, the power of the battery BT is supplied to the power generator G. The power generated by the power generator G is supplied to and accumulated in the battery BT. The drive motor M and the power generator G are actuators that convert energy therebetween, from electric energy to mechanical rotation energy and vice versa. The drive motor M mainly converts electric power into rotation torque. However, during the power regeneration, the drive motor M converts rotation torque into electric power. The power generator G mainly converts rotation torque into electric power. However, when the rotation speed of the pedals is controlled, electric power may be converted to rotation torque by the power generator control circuit GC.

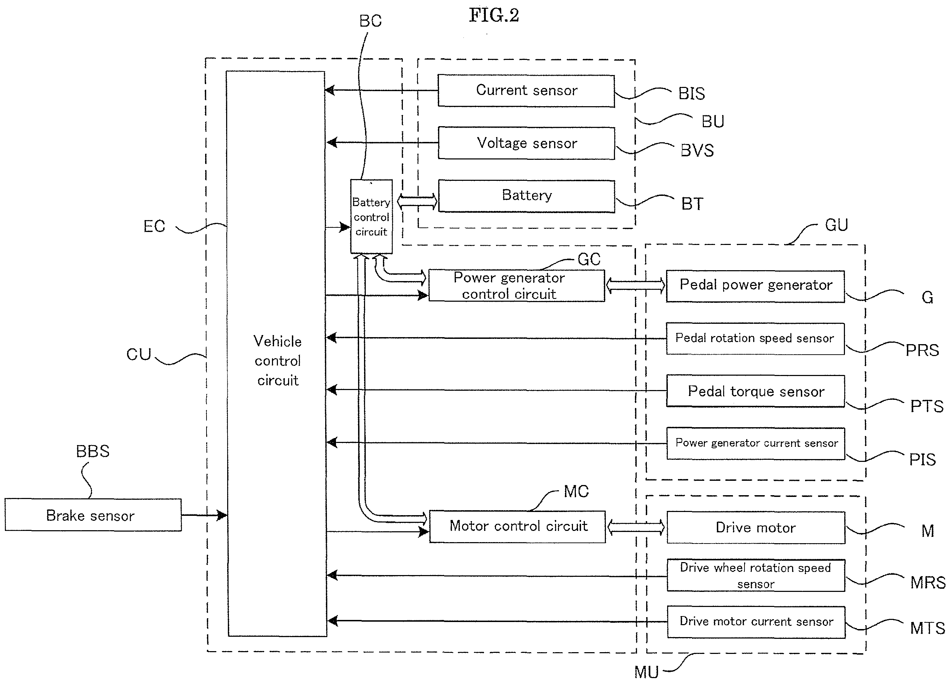

FIG. 2 is a block diagram showing the configuration of a control system of the present invention. The control system includes the vehicle control circuit EC, the battery control circuit BC, the power generator control circuit GC, and the motor control circuit MC. From each vehicle control circuit EC to other control circuits, command signals are supplied. To the vehicle control circuit EC, detection values from each sensor are input. Based on the input values, the vehicle control circuit EC determines the value of drag force being applied to the rotation shaft of the pedals, the target rotation speed of the pedals, the target vehicle speed, and the like.

The power generator control circuit GC is designed to control, based on a command related to the target rotation speed of the pedals coming from the vehicle control circuit EC, the rotation of the power generator in such a way as to bring the actual rotation speed of the pedals to the target rotation speed. More specifically, the power generator control circuit GC gives resistance to the rotation of the rotor of the power generator by controlling the current of the power generator, thereby controlling the rotation speed of the pedals.

The motor control circuit MC is designed to control, based on a command related to the value of the target vehicle speed coming from the vehicle control circuit EC, the power being supplied to the drive motor M in such a way as to bring the actual vehicle speed to the target value. During the regeneration of power, the motor control circuit MC controls and switches circuits in such a way as to supply the regenerated power obtained from the drive motor to the battery BT.

The battery control circuit BC switches modes based on a command from the vehicle control circuit EC. The battery control circuit BC includes a power generator line and drive motor line. For each, the battery control circuit BC switches modes: the modes include a mode in which power is supplied to the drive motor M, a mode in which a recharging takes place with the regenerated power from the drive motor M, a mode in which power is supplied to the power generator G, and a mode in which a recharging takes place with power generated by the power generator G.

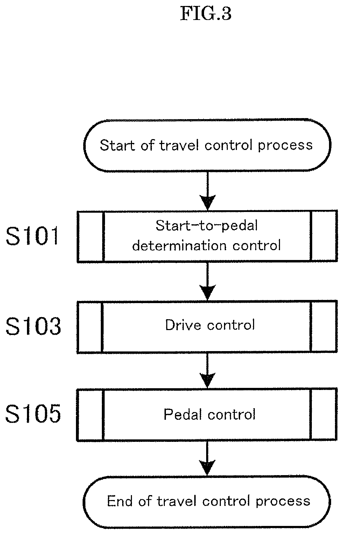

A travel control process of the electric vehicle of the present invention will be described based on flowcharts shown in FIGS. 3 to 6. This control process includes a start-to-pedal determination control process S101, which is carried out when a user starts to pedal a stopped bicycle by pumping the pedals; a drive control process S103, which is carried out regarding a drive output when the vehicle runs; and a pedal control process S105, which controls the resistance being applied to the pedal rotation shaft in such a way as to mimic a pedal feeling of general bicycles whose pedals are connected to a drive wheel via a mechanical power transmission mechanism, as for the operation by a driver of pumping the pedals during running.

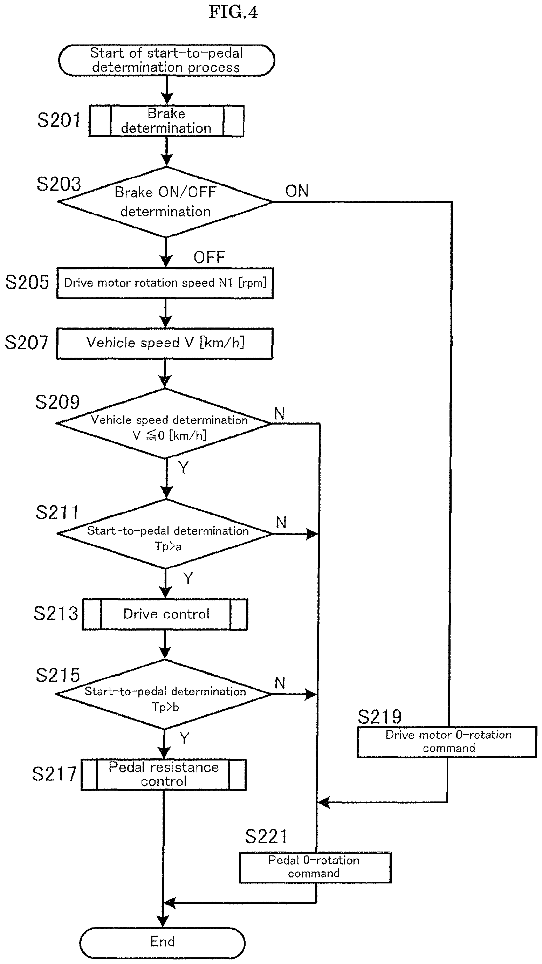

Based on the flowchart shown in FIG. 4, the start-to-pedal determination process will be described. In the electric vehicle of the present invention, the running resistance being applied to the drive wheel is not conveyed as the drag force on the pedals that the driver is pumping. Therefore, the process is carried out in such a way as to control the rotation of the pedals while receiving the tread force on the pedals.

A brake operation amount is obtained from the brake sensor BBS (Step S201). From the obtained operation amount and based on the brake, a determination is made as to whether or not the brake is turned ON, or whether or not the operation of locking the drive wheel is being performed (Step S203) . If the brake is OFF, rotation speed N1 of the drive motor is obtained from the drive motor rotation speed sensor MRS (Step S205) . Based on the obtained rotation speed, vehicle speed V is calculated (Step S207) . As for the process of obtaining the vehicle speed, a separate vehicle speed sensor may be provided, and the vehicle speed may be obtained from the vehicle speed sensor.

Then, a determination is made as to whether vehicle speed V obtained at step S207 is less than or equal to zero (V≤0) (Step S209) . If vehicle speed V is less than or equal to zero, this means that the vehicle is able to move forward. Accordingly, a determination is then made as to whether an operation of starting to pedal is being carried out. That is, torque Tp, which is being applied via the pedals, is obtained from the pedal torque sensor PTS, and a determination is made as to whether torque Tp is greater than a predetermined threshold value a (Step S211). In the situation where the crankshafts 250 can freely rotate, the torque associated with the tread force on the pedals cannot be detected. Therefore, in order to let the pedal torque sensor PTS detect the torque, a zero-rotation speed command has been issued in advance to the power generator G; the rotation of the crankshafts 250 has been specified prior to step S211.

The threshold value a is set to the values described below, for example. In a conventional bicycle that includes a power transmission mechanism such as chain, the pedals do not move in the forward direction in a stop state in which the drive wheel is stopped. In order to reproduce such a pedal operation feeling of the conventional bicycle, the threshold value a is set to a value of torque required to make a user feel the pedals are locked when the vehicle is stopped, or the threshold value a may be a value that is set as a minimum value required to move the vehicle forward. Alternatively, in order to enable people with a weaker tread force than general healthy persons, such as elderly people, to start to move the vehicle forward, the threshold value a may be set to torque that can be generated even when their feet are simply put on the pedals. If the torque value Tp is greater than the threshold value a, it is determined that the tread force being applied is enough to pump the pedals in the forward direction (or that the driver intends to move the vehicle forward). In this case, the process moves to a drive travel control process (Step S213).

If it is determined at step S203 that the brake is ON (or the wheel is being stopped), this means that the driver intends to keep the vehicle stopped. Accordingly, to the motor control circuit MC, a command is supplied to set the target rotation speed of the drive motor M at 0 (Step S219) . This process restricts the rotation of the drive motor M in such a way that the brake is substantially being applied to the drive wheel. After step S219, to the power generator control circuit GC, a command is supplied to set the target rotation speed at 0 (S221). This process locks the pedals.

If it is determined at step S209 that the vehicle speed V is not equal to zero or less than zero, this at least means that the vehicle is moving forward. As for the state of the vehicle, for example, there may be no driver on the saddle, or there may be a driver on the saddle but he/she is not pedaling, even as the vehicle is moving forward. Then, in the start-to-pedal determination process, in order to detect the torque being applied to the pedals, the pedals need to be locked. Therefore, a command is supplied to the power generator control circuit GC to set the pedal rotation speed at 0 (Step S221).

If the pedal torque Tp is less than the threshold value a at step S211, then it is determined that the tread force being applied to the pedals is not enough to generate a sufficient torque required to move the vehicle forward. As a result, it is determined that no operation is performed that is intended to start to pedal. Accordingly, the process does not move to the drive control process (Step S213), and a command is supplied to the power generator control circuit GC to set the pedal rotation speed at 0 (Step S221) . The control process of setting the pedal rotation speed at 0 is executed until the value of torque being input to the crankshafts 250 because of the tread force exceeds threshold value b described later.

During the above-described process, the state where it is determined at step S211 that the pedal torque Tp is less than the threshold value a is the situation where the driver on the saddle 241 of the bicycle moves the brake levers 224 back (OFF) and then puts his/her foot on the pedal in preparation for starting to pedal. At this time, due to the weight of the driver and vehicle body, the drive wheel is stopped, and the cranks 25R and 25L are stopped as well.

If the driver applies more power through the foot placed on the pedal in such a way as to increase the pedal tread force, and the pedal torque Tp exceeds the threshold value a, then it can be assumed that the torque required to start the bicycle has been applied through the pedal. As a result, the drive control process starts (Step S213) . This state is assumed to be equivalent to the situation where a user of a general bicycle puts his/her one foot on the ground and presses a pedal with another foot to start the bicycle.

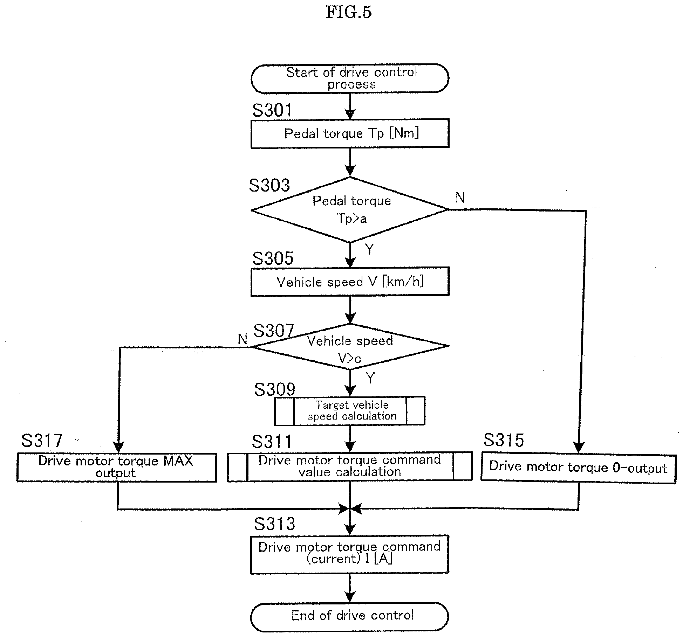

Based on the flowchart shown in FIG. 5, the drive control process will be described. From the pedal torque sensor PTS, the torque Tp that is input from the pedals is acquired (Step S301) . A determination is made as to whether the acquired pedal torque Tp is greater than the threshold value a (Step S303). If the acquired pedal torque Tp is greater than the threshold value a, it is then determined that the driver intends to drive the drive wheel 23f. Accordingly, vehicle speed V is calculated from a rotation speed that is obtained by the drive wheel rotation speed sensor MRS (Step S305) .

A determination is made as to whether the vehicle speed V obtained at step S305 is greater than threshold value c (Step S307) . The threshold value c is set to a speed at which the bicycle is running with both feet on the left and right pedals after being accelerated from a speed of 0.

If the vehicle speed V is greater than the threshold value c, then a target vehicle speed is calculated based on the pedal torque Tp acquired at step S301 (Step S309). Then, the value of torque that the drive motor M needs to output to take the vehicle speed to the target vehicle speed is calculated, and the value is regarded as torque command value T0 (Step S311). As for the calculation of the torque command value T0, the torque command value T0 is determined by taking into account a difference between the current vehicle speed and the target vehicle speed and the pace of acceleration at a time when the bicycle starts to move from a speed of 0.

The determined torque command value T0 is supplied to the motor control circuit MC (Step S313). The motor control circuit MC controls the value of current in such a way that the drive motor M outputs the specified torque value T0.

If the vehicle speed V is less than the threshold value c at step S307, this means that the vehicle has not reached a speed at which the driver can put his/her both feet on the pedals. Therefore, the vehicle is in an unstable state, and therefore needs to quickly accelerate to a speed at which the vehicle can run in a stable manner. That is, the speed needs to be quickly raised to the threshold value c. Accordingly, the torque command value T0 is set to a maximum value of output torque of the drive motor M (Step S317), and a command is issued (Step S313) . The output torque value that is set during this process (Step S313) may not be a maximum value. However, since the vehicle needs to accelerate, at least a torque greater than the torque currently being output from the drive motor M is necessary. The maximum-value output is canceled when the vehicle speed has reached the threshold value c. After that, the processes of steps S309 to 311 are carried out.

If the pedal torque Tp is less than the threshold value a at step S303, then it is determined that the driver does not intend to accelerate. Accordingly, the output torque of the drive motor M is set at 0 (Step S315), and torque command value T0 (= 0) is supplied to the motor control circuit MC (Step S313) . This state is the situation where the bicycle is moving by inertia with the drive motor M not driving. The above-described steps S301, S305, S309, S311, S317, and S313 make up a drive control unit. Step S301 constitutes a pedal torque acquisition unit. Step S305 constitutes a vehicle speed acquisition unit. Steps S309 to S313 constitute a drive torque determination unit. Step S317 constitutes an acceleration torque determination unit.

After the drive control is started, then a determination is made as to whether the pedal torque Tp is greater than threshold value b (Step S215). The threshold value b is a value necessary to further accelerate: threshold value b > threshold value a. If the pedal torque Tp is less than the threshold value b, it is determined that the driver does not intend to accelerate, and the pedal rotation speed remains set at 0 (Step S221).

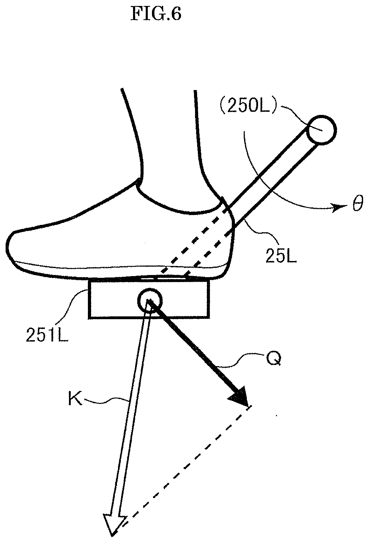

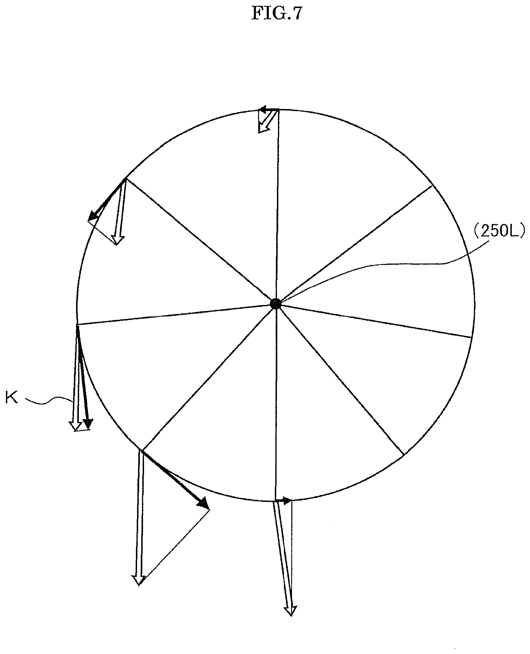

If the pedal torque Tp is greater than the threshold value b, a pedal control process (step S217) is carried out. The pedal control process will be outlined. As shown in FIG. 6, a force (tread force) K applied by a foot onto the pedal 251L is applied in an almost vertical direction. A force generated by the tread force to rotate the crankshaft 250L, or torque, is represented by a value calculated by multiplying component force Q in a tangential direction of a rotation trajectory (circular ring) of the pedal 251L by the length of the crank. As shown in FIG. 7, the pedal tread force K varies according to the position of the pedal, and the component force Q, too, varies greatly. The pedal tread force K starts to emerge at a time when the pedal is near the top. The pedal tread force K is maximized at a time when the pedal is between an area near a front side and a lower side. The pedal tread force K decreases as the pedal moves toward a rear side. Furthermore, the direction of the component force Q is aligned with the direction of the tread force K at around a point where the moving direction of the pedal, which moves along the circumference, is in the downward direction. At this time, the component force Q is strongest. In this manner, during one revolution of the pedal, the torque Tp being applied to the crankshaft 250L changes periodically. Based on the change, the rotation speed, too, changes periodically.

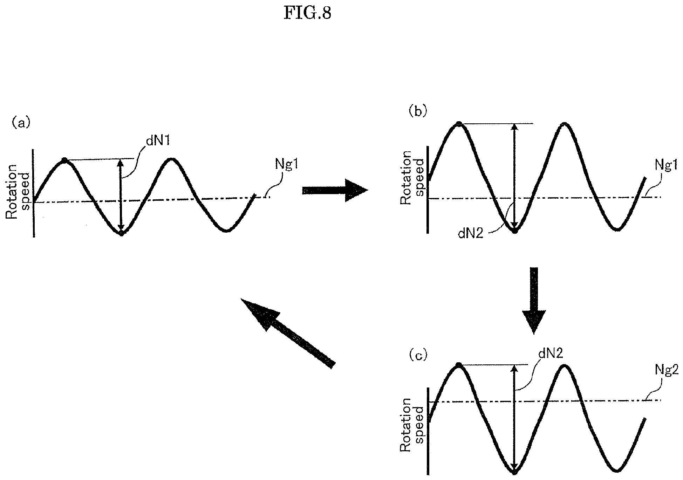

FIG. 8 is a diagram showing a periodic change of the pedal rotation speed which changes according to a pedaling operation on a driven vehicle. Graph (a) in the diagram conceptually shows a change in the rotation speed in the case where a vehicle is running at a constant speed on the flat ground. The change in the rotation speed is represented by a curve that is substantially consistent with a sine wave. Such a rotation-speed change similarly occurs in a general bicycle in which power from a crankshaft of a pedal is mechanically transmitted to a drive wheel. However, the inertia of the running vehicle is directly conveyed from the drive wheel to the pedal. Therefore, a change the driver feels from the pedal when pumping the pedal is not as large as that shown in the graph.

However, if the drive wheel 23f is not mechanically connected to the crankshafts 250 as in the case of the vehicle of the present invention, the reaction force associated with the inertia is not conveyed. Accordingly, the driver feels directly the rotation-speed change via his/her feet on the pedals, therefore having a sense of discomfort due to a great difference between the feeling he/she has in driving a general bicycle and that he/she has for the vehicle. In particular, when the pedal tread force is increased to climb slopes or accelerate, the peak-to-peak width of the changing rotation speed becomes larger as shown in graph (b), with tendency to increase a sense of discomfort. In order to eliminate a sense of discomfort during the pedaling, during the pedaling, a force is applied to the crankshafts 250 in such a way as to go against the pedal tread force, thereby generating a pedal feeling close to that of a general bicycle whose drive wheel is mechanically connected to the pedals. If a sense of discomfort is amplified as a result of the increased pedal tread force, a further process is carried out to adjust the rotation speed of the crankshaft 250L in order to reduce a sense of discomfort.

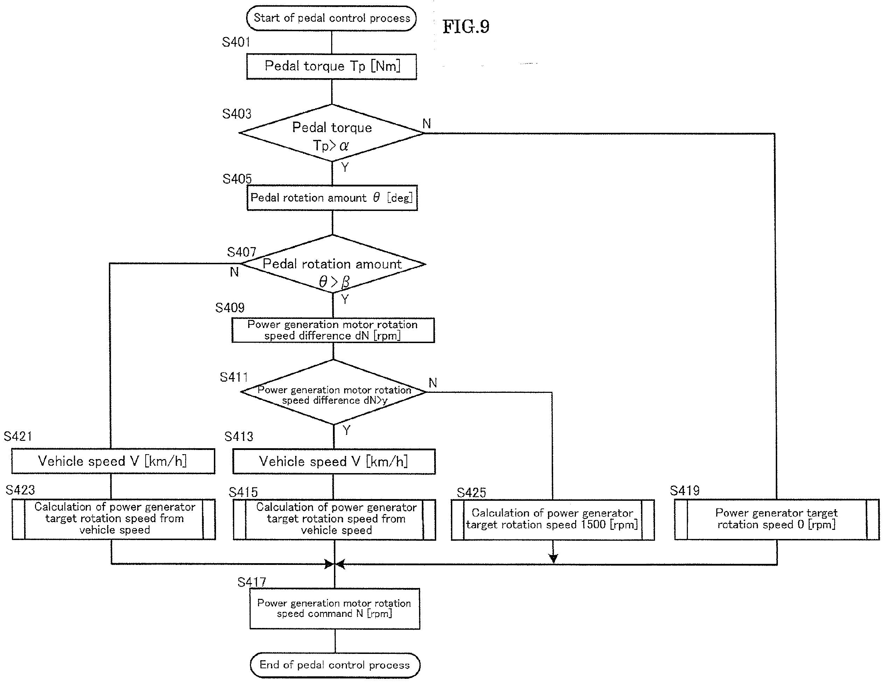

Based on the flowchart shown in FIG. 9, the pedal control process will be described. Torque Tp that is input from the pedals is acquired via the pedal torque sensor PTS (Step S401). A determination is made as to whether the acquired torque Tp is greater than the threshold value α (Step S403) . If the acquired torque Tp is less than the threshold value α, then it is determined that the driver does not intend to accelerate, and a decision is therefore made that the pedal rotation speed will be set at 0, or that the pedals will be locked (Step S419) . If the torque Tp is greater than the threshold value α, the pedal 0-rotation speed setting, which is set at step S221 or S419, is cancelled. That is, the pedals will be able to rotate. Then, the rotation amount θ of the cranks 25L and 25R, which is supplied from the pedal rotation speed sensor PRS, is monitored (Step S405) . A determination is made as to whether the rotation amount θ of the cranks 25L and 25R exceeds a predetermined value β (Step S407). The predetermined value β is a value used to determine whether or not the pedals are rotating.

If the rotation amount θ is greater than the predetermined value β, it is determined that the pedals are rotating. Accordingly, the rotation speed that is input from the pedals to the power generator G is monitored, and a percentage of the rotation-speed change, which periodically occurs, is detected. Based on the percentage of the change, a target rotation speed of the power generator is set. The percentage of the rotation-speed change is calculated as a difference (dN) between a maximum value and a minimum value during a period in which the rotation-speed change is being monitored, for example. The difference in the rotation speed may be calculated as the amplitude of the periodically-changing rotation speed; or the difference in the rotation speed may be calculated as a difference between an average value and a maximum value or a difference between an average value and a minimum value as an index showing the percentage of the change. Instead, the slope of a curve on the average value (acceleration of the rotation speed) may be acquired as an index showing the percentage of the change; or the slope of a straight line connecting the maximum and minimum values, or the value of an area (value of integral) surrounded by the sine wave and target rotation speed Ng shown in the graphs of FIG. 8, may be used as the index. According to this embodiment, as described above, as the index showing the percentage of the rotation-speed change, a difference between the maximum and minimum values of the rotation speed is calculated (Step S409).

A determination is made as to whether rotation-speed difference dN is greater than predetermined value γ (Step S411). If the rotation-speed difference dN is greater than the predetermined value γ, it is determined that the driver is pumping the pedals with the intention of accelerating. In this case, based on the pedal torque Tp and rotation amount θ acquired at steps S401 and S405, vehicle speed V at a time when the rotation amount θ is achieved with the acquired pedal torque Tp is calculated (Step S413) . Then, as shown in the graphs of FIG. 8, particularly at the time of accelerating (FIG. 8B), the pace of pedaling is more likely to fluctuate and lead to a sense of discomfort. Therefore, the process described below will be carried out. Pedal rotation speed Ng1 of a general bicycle whose vehicle speed has reached the vehicle speed V calculated at step S413 as the driver has pumped the pedals is calculated. Then, a value that is higher than the pedal rotation speed Ng1 is set as a target rotation speed Ng2 of the power generator G (Step S415). In this manner, the target rotation speed Ng2 is set higher than the expected rotation speed of the actual bicycle (Ng1 < Ng2: FIG. 8B) . Therefore, the torque required to rotate the pedals is lowered (i.e. the drag force that goes against the torque input by the pedal tread force becomes smaller). In this manner, a sense of discomfort that the driver could feel when he/she is pedaling is reduced.

If it is determined at step S407 that the rotation amount θ is smaller than the predetermined value β, then it can be determined that the pedals have yet to rotate. Accordingly, based on drive-wheel rotation speed Nm that is acquired from the drive wheel rotation speed sensor MRS, vehicle speed V is calculated (Step S421) . Pedal rotation speed r0 of a general bicycle whose vehicle speed has reached the vehicle speed V calculated at step S421 as the driver has pedaled the vehicle is calculated; the pedal rotation speed r0 is set as a target rotation speed r1 of the power generator G (Step S423).

Incidentally, if the pedal torque Tp is smaller than the threshold value α at step S403, the target rotation speed of the power generator G is set at 0, and the pedals remain locked (Step S419). If the rotation-speed difference dN is smaller than the predetermined value γ at step S411, it is determined that the driver intends to decelerate. In such a case, the driver is unlikely to feel a fluctuation in the pace of pedaling. Therefore, a standby rotation speed of the power generator G is set as the target rotation speed (Step S425).

The target rotation speed of the power generator G that is determined at steps S423, S415, S425, and S419 is supplied to the power generator control circuit GC (Step S417). The power generator control circuit GC controls the rotation speed by appropriately applying resistance to the rotation of the pedals, so that the target rotation speed is achieved.

The above-described steps S401, S413, S415, S417, S401, S421, S423, and S417 constitute a resistance adjustment unit.

A drag force applying unit could be the power generator G. In addition, a friction braking device, such as a disc brake, may be used, and a drag force adjustment unit may be provided in such a way as to adjust the pressing force of the braking member in order to adjust the drag force. Instead, a flywheel may be provided as the drag force applying unit, and a transmission system that is provided between the flywheel and a crankshaft may be used as the drag force adjustment unit; a transmission gear ratio may be changed to adjust the drag force.

Incidentally, in the case of the present invention, the power generator G, which is used to control the rotation by applying a drag force to the pedals, and the drive motor M, which outputs a drive force, are controlled separately in order to create an operation feeling that is in line with that of a general bicycle or assisted bicycle. However, the present invention is not limited to this. By separately controlling the pedals and the drive wheel, it is also possible to provide a vehicle with a totally new operation feeling, which conventional configurations were unable to achieve. It is possible to provide a vehicle that can travel at a higher speed than conventional bicycles by setting the ratio of rotation of the drive wheel to rotation of the pedals to a value that is higher than before; or it is possible to provide a vehicle that can produce a dieting effect by setting the ratio to a value that is lower than before in order to force a user to do more work to rotate the pedals and move the vehicle forward.

As the electric vehicle, the bicycle has been explained as an example. However, the present invention is not limited to a two-wheeled vehicle with front and rear wheels. The present invention may be applied to a three-wheeled vehicle or a four-wheeled vehicle, which has two front wheels and two rear wheels . Moreover, the drive wheel may be a rear wheel, not a front wheel.

### Industrial Applicability

An electric bicycle, which does not have a mechanical transmission mechanism and in which an input device including pedals and a drive device for driving a drive wheel are electrically connected, has been proposed. In such an electric bicycle, the drive wheel is not mechanically connected to the pedals. Therefore, there were fewer chances for a user to feel the pedals (or weight of the pedals) via his/her pedaling legs in a way that is consistent with running conditions, and this caused an uncomfortable feeling. In the case of the electric vehicle of the present invention, it is possible to provide an electric vehicle that enables a user who is pedaling to feel in the same way as a vehicle in which the pedal rotation mechanism and the drive wheel are mechanically connected. Therefore, the present invention is very high in industrial applicability.

### Explanation of Reference Symbols

- 1:: Electric vehicle
- 2:: Vehicle body
- 22:: Handle
- 241:: Saddle
- 23f:: Drive wheel
- 23b:: Driven wheel
- CU:: Control unit
- BU:: Battery unit
- GU:: Power generation unit

## Claims

1. An electric vehicle (1) comprising:
a vehicle body (2) for carrying a driver;
a front wheel (23f) and rear wheel (23b) that are supported by front and rear portions (222) of the vehicle body (2);
a pedal (251R, 251L) that receives a tread force of the driver, wherein the front and rear wheels (23f, 23b) do not receive any mechanical transmission from the pedal (251R, 251L);
a rotation shaft;
a crank (25R, 25L) whose tip portion is provided with the pedal (251R, 251L) and which conveys the tread force to the rotation shaft as torque;
a motor (M) that drives at least the front or rear wheel (23f, 23b);
a resistance applying unit (GU) that generates, when torque is applied to the rotation shaft because of the tread force on the pedal (251R, 251L), resistance on the rotation shaft against the torque; and
a running condition detection unit (PTS) that detects a running condition of the vehicle (1); **characterized by**
a resistance adjustment unit (CU, S401, S413, S415, S417, S421, S423) that decreases the resistance being applied by the resistance applying unit (G) at the increasing of a percentage of the rotation-speed change of the rotation that is input by the pedal (251R, 251L) to the resistance applying unit (GU) detected by the running condition detection unit (PTS).

2. The electric vehicle (1) according to claim 1, **characterized in that**
the percentage of the rotation-speed change is calculated (S409) as a difference between a maximum value and a minimum value of the rotation input by the pedal (251R, 251L), and
if the rotation speed difference is greater than a predetermined value (γ), the target rotation-speed of the resistance applying unit (GU) is calculated from vehicle speed (S415).

3. The electric vehicle (1) according to claim 2, **characterized in that**
the target rotation-speed of the resistance applying unit (GU) is set such that
a pedal rotation speed of a general bicycle whose vehicle speed is set such that a vehicle speed calculated as the driver has pumped the pedals of the general bicycle is calculated,
then the target rotation-speed is set higher than the calculated pedal rotation speed of a general bicycle.

4. The electric vehicle (1) according to claim 2, **characterized in that**
the vehicle speed is calculated based on the pedal torque and rotation amount of the rotation shaft.

5. The electric vehicle (1) according to claim 1, **characterized in that**
the percentage of the rotation-speed change is calculated (S409) as a difference between a maximum value and a minimum value of the rotation input by the pedal (251R, 251L), and
if the rotation speed difference is smaller than a predetermined value (γ), the target rotation-speed of the resistance applying unit (GU) is set to a fixed value (S425).

6. The electric vehicle (1) according to any one of claims 1 to 5, **characterized in that**
the resistance applying unit (GU) is a power generator, and the resistance adjustment unit (CU, S401, S413, S415, S417, S421, S423) adjusts the resistance by controlling current flowing through the power generator.

## Patentansprüche

1. Elektrisches Fahrzeug (1) mit:
einem Fahrzeugkörper (2) zum Tragen eines Fahrers;
einem Vorderrad (23f) und einem Hinterrad (23b), die durch vordere und hintere Abschnitte (222) des Fahrzeugkörpers (2) gehalten werden;
einem Pedal (251R, 251L), das eine Tretkraft des Fahrers empfängt, wobei die Vorder- und Hinterräder (23f, 23b) keine mechanische Übertragung von dem Pedal (251R, 251L) empfangen;
einer Drehwelle;
einer Kurbel (25R, 25L), deren Spitzenabschnitt mit dem Pedal (251R, 251L) versehen ist und die die Tretkraft zu der Drehwelle als ein Drehmoment befördert;
einem Motor (M), der zumindest das Vorder- oder das Hinterrad (23f, 23b) antreibt;
einer Widerstandsanlegeeinheit (GU), die, wenn ein Drehmoment an die Drehwelle aufgrund der Tretkraft auf das Pedal (251R, 251L) angelegt wird, einen Widerstand bei der Drehwelle gegen das Drehmoment erzeugt; und
einer Fahrzustandserfassungseinheit (PTS), die einen Fahrzustand des Fahrzeugs (1) erfasst;
**gekennzeichnet durch**
eine Widerstandsjustiereinheit (CU, S401, S413, S415, S417, S421, S423), die den Widerstand verkleinert, der durch die Widerstandsanlegeeinheit (G) bei der Vergrößerung eines Prozentsatzes der Drehzahländerung der Drehung, die durch das Pedal (251R, 251L) in die Widerstandsanlegeeinheit (GU) eingegeben wird, angelegt wird, die durch die Fahrzustandserfassungseinheit (PTS) erfasst wird.

2. Elektrisches Fahrzeug (1) nach Anspruch 1, **dadurch gekennzeichnet, dass**
der Prozentsatz der Drehzahländerung als eine Differenz zwischen einem maximalen Wert und einem minimalen Wert der Drehung, die durch das Pedal (251R, 251L) eingegeben wird, berechnet wird (S409), und,
wenn die Drehzahldifferenz größer als ein vorbestimmter Wert (γ) ist, die Solldrehzahl der Widerstandsanlegeeinheit (GU) aus einer Fahrzeuggeschwindigkeit berechnet wird (S415).

3. Elektrisches Fahrzeug (1) nach Anspruch 2, **dadurch gekennzeichnet, dass**
die Solldrehzahl der Widerstandsanlegeeinheit (GU) derart eingestellt wird, dass
eine Pedaldrehzahl eines allgemeinen Fahrrads, dessen Fahrzeuggeschwindigkeit derart eingestellt wird, dass eine Fahrzeuggeschwindigkeit, die berechnet wird, wenn der Fahrer die Pedale des allgemeinen Fahrrads gepumpt hat, berechnet wird,
wobei dann die Solldrehzahl höher eingestellt wird als die berechnete Pedaldrehzahl eines allgemeinten Fahrrads.

4. Elektrisches Fahrzeug (1) nach Anspruch 2, **dadurch gekennzeichnet, dass**
die Fahrzeuggeschwindigkeit auf der Grundlage des Pedaldrehmoments und eines Drehbetrags der Drehwelle berechnet wird.

5. Elektrisches Fahrzeug (1) nach Anspruch 1, **dadurch gekennzeichnet, dass**
der Prozentsatz der Drehzahländerung als eine Differenz zwischen einem maximalen Wert und einem minimalen Wert der Drehung, die durch das Pedal (251R, 251L) eingegeben wird, berechnet wird und,
wenn die Drehzahldifferenz kleiner als ein vorbestimmter Wert (γ) ist, die Solldrehzahl der Widerstandsanlegeeinheit (GU) auf einen fixierten Wert eingestellt wird (S425).

6. Elektrisches Fahrzeug (1) nach einem der Ansprüche 1 bis 5, **dadurch gekennzeichnet, dass**
die Widerstandsanlegeeinheit (GU) eine Leistungserzeugungseinrichtung ist und die Widerstandsjustiereinheit (CU, S401, S413, S415, S417, S421, S423) den Widerstand justiert, indem ein Strom, der durch die Leistungserzeugungseinrichtung fließt, gesteuert wird.

## Revendications

1. Véhicule électrique (1) comprenant :
un corps de véhicule (2) pour transporter un conducteur ;
une roue avant (23f) et une roue arrière (23b) qui sont supportées par les parties avant et arrière (222) du corps de véhicule (2) ;
une pédale (251R, 251L) qui reçoit une force de pédalage du conducteur, dans lequel les roues avant et arrière (23f, 23b) ne reçoivent pas de transmission mécanique de la pédale (251R, 251L) ;
un arbre de rotation ;
une manivelle (25R, 25L) dont la partie de pointe est prévue avec la pédale (251R, 251L) et qui transporte la force de pédalage jusqu'à l'arbre de rotation en tant que couple ;
un moteur (M) qui entraîne au moins la roue avant ou arrière (23f, 23b) ;
une unité d'application de résistance (GU) qui génère, lorsque le couple est appliqué sur l'arbre de rotation en raison de la force de pédalage sur la pédale (251R, 251L), la résistance sur l'arbre de rotation contre le couple ; et
une unité de détection de condition de roulement (PTS) qui détecte une condition de roulement du véhicule (1) ; **caractérisé par** :
une unité d'ajustement de résistance (CU, S401, S413, S415, S417, S421, S423) qui réduit la résistance qui est appliquée par l'unité d'application de résistance (G) lors de l'augmentation d'un pourcentage du changement de vitesse de rotation de la rotation qui est entrée par la pédale (251R, 251L), sur l'unité d'application de résistance (GU) détectée par l'unité de détection de condition de roulement (PTS).

2. Véhicule électrique (1) selon la revendication 1, **caractérisé en ce que** :
le pourcentage du changement de vitesse de rotation est calculé (S409) en tant que différence entre une valeur maximum et une valeur minimum de l'entrée de rotation par la pédale (251R, 251L), et
si la différence de vitesse de rotation est supérieure à une valeur prédéterminée (Y), la vitesse de rotation cible de l'unité d'application de résistance (GU) est calculée à partir de la vitesse de véhicule (S415).

3. Véhicule électrique (1) selon la revendication 2, **caractérisé en ce que** :
la vitesse de rotation cible de l'unité d'application de résistance (GU) est déterminée de sorte que :
une vitesse de rotation de pédale d'une bicyclette générale dont la vitesse de véhicule est déterminée de sorte qu'une vitesse de véhicule calculée lorsque le conducteur a pompé sur les pédales de la bicyclette générale, est calculée,
alors la vitesse de rotation cible est supérieure à la vitesse de rotation de pédale calculée d'une bicyclette générale.

4. Véhicule électrique (1) selon la revendication 2, **caractérisé en ce que** :
la vitesse de véhicule est calculée sur la base de la quantité de couple et de rotation de pédale de l'arbre de rotation.

5. Véhicule électrique (1) selon la revendication 1, **caractérisé en ce que** :
le pourcentage du changement de vitesse de rotation est calculé (S409) en tant que différence entre une valeur maximum et une valeur minimum de l'entrée de rotation par la pédale (251R, 251L), et
si la différence de vitesse de rotation est inférieure à une valeur prédéterminée (Y), la vitesse de rotation cible de l'unité d'application de résistance (GU) est déterminée sur une valeur fixe (S425).

6. Véhicule électrique (1) selon l'une quelconque des revendications 1 à 5, **caractérisé en ce que** :
l'unité d'application de résistance (GU) est un générateur d'alimentation, et l'unité d'ajustement de résistance (CU, S401, S413, S415, S417, S421, S423) ajuste la résistance en contrôlant le courant qui s'écoule par le générateur d'alimentation.
